# EUROPEAN PATENT SPECIFICATION

(11) **EP 1 578 593 B1**
(45) Date of publication and mention of the grant of the patent: **14.06.2006**
(21) Application number: 03780092.7
(22) Date of filing: 01.12.2003
(51) Int. Cl.: B29D 30/00, B29D 30/62, C08L 21/00, C08K 5/00, C08K 5/1515, C08K 5/103

(54) **PROCESS FOR PRODUCING A TYRE FOR VEHICLE WHEELS**
PROZESS ZUR HERSTELLUNG VON REIFEN FÜR FAHRZEUGRÄDER
PROCEDE DE PRODUCTION DE PNEUMATIQUE POUR ROUES DE VEHICULE

(30) Priority: 19.12.2002 WO PCT/EP02/14565
(43) Date of publication of application: 28.09.2005
(73) Proprietor: Pirelli Pneumatici S.p.A., 20126 Milano (IT)
(72) Inventor: GALIMBERTI, Maurizio, I-20133 Milano (IT); RATTI, Giuseppina, I-20038 Seregno (IT); LA CAMERA, Domenico, NL-4811 NZ Breda (NL); SENATORE, Daniela, NL-4811 NZ Breda (NL)
(74) Representative: Bottero, Carlo
(86) International application number: PCT/EP2003/013499
(87) International publication number: WO 2004/056557

(56) References cited:
- EP-A- 0 328 261
- EP-A- 1 085 049
- WO-A-02/083433
- DE-A- 19 700 967
- US-A- 3 032 519
- US-B1- 6 482 884

## Description

The present invention relates to a process for producing a tyre for vehicle wheels.

More in particular, the present invention relates to a process for producing a tyre for vehicle wheels which includes: feeding an elastomeric composition to an extruder; forming by extrusion said elastomeric composition as a continuous elongated element; depositing said continuous elongated element on a support in a plurality of coils to make up a structural element of a tyre.

The present invention also relates to a method for reducing the elongational viscosity of an elastomeric composition.

The manufacture of tyres for vehicle wheels involves the formation of a carcass structure essentially made up of one or more carcass plies substantially of a toroidal shape and having their axially opposite side edges in engagement with respective circumferentially inextensible annular reinforcing elements, usually referred to as "bead wires".

On the carcass structure is applied, in a radially external position, a belt structure comprising one or more belt strips in the form of a closed ring and essentially made up of textiles or metallic cords suitably oriented with respect to each other and with respect to the cords belonging to the adjacent carcass plies.

At a radially external position of the belt structure, a tread band is provided which usually consists of a band of elastomeric material of suitable thickness.

Finally, a pair of sidewalls is provided on the opposite sides of the tyre, each of said sidewalls covering a side portion of the tyre included between a so-called shoulder region located in proximity to the corresponding side edge of the tread band, and a so-called bead located in correspondence to the respective bead wire.

Traditional production methods essentially provide for the above listed tyre structural elements to be first made separately from each other, then to be assembled during a tyre manufacturing.

Many efforts have been recently made to reduce or possibly eliminate production and storage of semifinished products in a process for producing tyres.

In this regards, production processes have been proposed which aimed at obtaining given tyre structural elements such as tread band, sidewalls or others, by laying down a continuous elongated element of elastomeric material of a reduced section with respect to that of the structural element to be obtained, on a support bearing the tyre being manufactured, which elongated element is such arranged so as to form a plurality of consecutive coils disposed in side by side and/or superposed relationship so as to define the structural element in its final configuration. Said support may be a rigid support and may have a toroidal shape.

For example, WO 01/36185 in the name of the same Applicant, describes a method for manufacturing elastomeric material components of a tyre for vehicle wheels comprising the steps of: feeding a continuous elongated element from a delivery member (e.g. an extruder) positioned adjacently to a toroidal support to apply said elongated element onto the toroidal support itself; giving to the toroidal support a rotatory circumferential distribution motion about its own geometric rotation axis, so that the elongated element is circumferentially distributed on the toroidal support; carrying out controlled relative transverse distribution displacements between the toroidal support and the delivery member to form with said elongated element a structural element of a tyre defined by a plurality of coils laid down mutually approched and/or superimposed according to a pre-determined cross section profile to be conferred to said structural element. In particular said document teaches that if the peripheral speed of the toroidal support at the point of application of an elongated element is such controlled that a conveniently higher value than the feeding speed of the elongated element itself by the delivery member is maintained, adhesion of the applied elongated element is greatly improved and important advantages in terms of operating flexibility are achieved.

EP 0 968 814 describes a process and an apparatus for laying down rubber materials for tyre-constitutional members. A rubber material for a tyre-constitutional member is laid down on a rotating support with high efficiency and high accuracy by arranging a pair of rollers rotating in opposite directions in the vicinity of a radially outer surface portion of the support and utilising a gap defined between the rollers as a roller die. The apparatus for laying down rubber materials for tyre-constitutional members around a rotating support comprises a volumetric extruder for feeding an uncured rubber material on the rotating support, a pair of rollers located near to an outlet port of the volumetric extruder and near to a radially outer portion of the rotating support and driven in opposite directions to each other, and a gap defined between the pair of rollers and serving as a die for the rubber material to be laid down.

US 4 963 207 and US 5 171 394 disclose a method and apparatus for manufacturing tyres by the laying of rubber products on a firm rotatable support. The rubber products forming part of the tyre structure are laid down on a rigid core by means of a volumetric extruder having an outlet orifice of small size positioned close to the surface on which the rubber is applied. The rubber products are built up by a meridian displacement of the orifice relative to the receiving surface with the extrusion of controlled volume of rubber.

However, prior art methods for manufacturing a tyre or making a tyre component by deposition of elastomeric elongated elements on a support, present some drawbacks.

In particular, Applicant has noticed that if the extrusion of said elastomeric elongated elements is carried out at a high shear rate (e.g. 1000 s⁻¹), the obtained elastomeric elongated elements present some drawbacks such as, for example, irregular edges (e.g. ragged edges) and rough surfaces, premature crosslinking phenomena (scorching), which negatively affect the lay down of the same on a support. More in particular, Applicant noticed that said drawbacks are more evident in the case of elastomeric elongated elements comprising an elastomeric composition having a high Mooney viscosity ML(1+4) (e.g. higher than 70 at 100°C).

The Applicant tried to improve the processability of said crosslinkable elastomeric composition by adding a plasticizer or a processing aid in order to decrease Mooney viscosity ML(1+4). However, the Applicant noticed that the decrease of the Mooney viscosity ML(1+4) of the elastomeric composition does not solve the drawbacks mentioned above: the elastomeric composition still have the above reported drawbacks when extruded at high shear rates.

The Applicant then realized that, in order to operate at high shear rates, it was necessary to decrease the elongational viscosity of said elastomeric composition. It should be noted that Mooney viscosity ML(1+4) and elongational viscosity are different properties as demonstrated, for example, by the fact that a decreasing of the Mooney viscosity ML(1+4) is not always correlated with a decreasing of the elongational viscosity and viceversa.

The Applicant has now found that it is possible to overcome the drawbacks mentioned above utilizing an elastomeric composition comprising at least one elongational viscosity reducing additive. The reduction of the elongational viscosity of the elastomeric composition allows to extrude an elastomeric elongated element at high shear rates and, consequently, allows to increase both the productivity of said elastomeric elongated elements and the process for producing a tyre in its entirety. Moreover, said additive does not negatively affect the mechanical properties, both tensile (in particular stress at break) and dynamic (in particular modulus and tandelta), as well as the kinetics of curing, of the elastomeric composition.

According to a first aspect, the present invention thus relates to a process for producing a tyre, which includes:
- feeding an elastomeric composition to an extruder;
- forming by extrusion said elastomeric composition as a continuous elongated element;
- depositing said continuous elongated element on a support in a plurality of coils to make up a structural element of a tyre;
wherein the step of forming is carried out at a shear rate of at least 1000 s⁻¹ and the elastomeric composition comprises at least one elongational viscosity reducing additive in an amount so that elongational viscosity of said elastomeric composition, measured at 120°C, at the shear rate of the forming step, is at least 10% lower with respect to the elongational viscosity, measured in the same conditions, of the elastomeric composition devoid of said additive.

For the purposes of the present description and of the claims, the term "support" is used to indicate the following devices:
- an auxiliary drum having a cilindrical shape, said auxiliary drum preferably supporting a belt structure;
- a shaping drum having a substantially toroidal configuration, said shaping drum preferably supporting at least one carcass structure with a belt structure assembled thereon;
- a rigid support preferably shaped according to the inner configuration of the tyre.

Further details regarding said devices are given, for example, in the following European Patent Applications: EP 0 968 814 above cited, EP 1 201 414 and EP 1 211 057.

According to one preferred embodiment, the elongational viscosity of said elastomeric composition, measured at 120°C, at the shear rate of the forming step, is 15% lower with respect to the elongational viscosity, measured in the same conditions, of the elastomeric composition devoid of said additive.

According to a further preferred embodiment, the elongational viscosity of said elastomeric composition, measured at 120°C, at the shear rate of the forming step, is not lower than 50% with respect to the elongational viscosity, measured in the same conditions, of the elastomeric composition devoid of said additive.

Preferably, said support is a rotating support.

Preferably, said support is a rigid support.

Preferably, said rigid support has a toroidal shape.

Preferably, said continuous elongated element is constituted by a strip of the elastomeric composition with flattened section such as, for example, rectangular, elliptic or lenticular, or also with a tapered shape. Cross-section dimensions of said strip are considerably lower than the cross-section dimensions of the structural element to be manufactured. By way of example, the continuous elongated element may have a width indicatively ranging between 3 mm and 15 mm and a thickness indicatively ranging between 0.5 mm and 1.2 mm.

Preferably, said coils are disposed side by side along the cross section profile of the support. Said coils may be partially overlapped.

According to one preferred embodiment, said process is carried out with a drawing ratio (K) higher than 1, preferably higher than 1.5.

Said drawing ratio (K) is defined as the ratio between the deposition rate of the continuous elongated element and the production rate of the continuous elongated element. The deposition rate corresponds to the lenght of the elongated element deposited per time unit, as the production rate corresponds to the lentgh of the elongated element produced per time unit.

According to a preferred embodiment, said forming step is carried out at a shear rate of between 2000 s⁻¹ and 8000 s⁻¹, preferably between 4000 s⁻¹ and 6000 s⁻¹.

According to a further aspect, the present invention relates to a method for reducing the elongational viscosity of an elastomeric composition which comprises to add to said elastomeric composition at least one elongational viscosity reducing additive in an amount so that elongational viscosity of said elastomeric composition, measured at 120°C, at a shear rate of at least 1000 s⁻¹, is at least 10% lower with respect to the elongational viscosity, measured in the same conditions, of the elastomeric composition devoid of said additive.

According to one preferred embodiment, the elongational viscosity of said elastomeric composition, measured at 120°C, at a shear rate of at least 1000 s⁻¹, is 15% lower with respect to the elongational viscosity, measured in the same conditions, of the elastomeric composition devoid of said additive.

According to a further preferred embodiment, the elongational viscosity of said elastomeric composition, measured at 120°C, at a shear rate of at least 1000 s⁻¹, is not lower than 50%, with respect to the elongational viscosity, measured in the same conditions, of the elastomeric composition devoid of said additive.

According to a further preferred embodiment said elongational viscosity reducing additive may be selected from:
(a) glycidyl esters of an α-branched carboxylic acid containing from 6 to 22 carbon atoms;
(b) polyolefin waxes;
(c) copolymers of ethylene with at least one aliphatic α-olefin, and optionally a polyene;
(d) thermoplastic polymers having a main hydrocarbon chain to which hydrophilic groups are linked;
(e) fatty acid esters derived from at least one saturated or unsaturated fatty acid having from 8 to 24 carbon atoms and at least one polyhydric alcohol having from 2 to 6 carbon atoms.

According to one preferred embodiment, the glycidyl esters (a) may be selected from those having the following general formula (I): 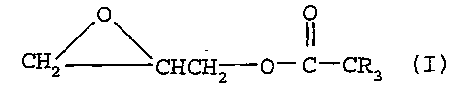 wherein the R groups, equal or different from each others, represent hydrogen or linear or branched aliphatic groups, with the provisio that the R groups have a total number of carbon atoms of from 6 to 18, preferably from 8 to 12.

Said glycidyl esters (a) may be obtained by reacting a monofunctional α-branched carboxylic acid such as, for example, alkanoic acid (e.g. octanoic acid) or neoalkanoic acids (e.g. neodecanoic acid), with an epihalohydrin (e.g. epichloridrin), under conditions well known in the art. The glycidyl esters (a) of a neoalkanoic acid or of a mixture of neoalkanoic acids are particularly preferred.

Example of a glycidyl ester (a) which may be used in the present invention and which is currently commercially available is the product Glydexx^{™} N-10 from Exxon Mobil Chemical.

According to one preferred embodiment, the polyolefin waxes (b) may be selected from homopolymers of an α-olefin or copolymers of at least two α-olefin such as, for example, ethylene, propylene, 1-butene, 1-hexene, 4-methyl-1-pentene, 1-decene, or mixtures thereof, having an intrinsic viscosity (η), measured at 135°C in decalin, of between 0.03 dl/g to 1.0 dl/g.

Preferably, said polyolefin waxes (b) have the following characteristic:
- a molecular weight distribution (MWD) index of less than 5, preferably of between 1.0 and 3;
- a number-average molecular weight of less than 4000, preferably of between 450 and 3000;
- a melting point (Tₘ) of less than 140°C, preferably of between 70°C and 135°C,
- a viscosity at 140°C, measured according to ASTM standard D3236-88, of less than 160 cps, preferably of between 20 cps and 100 cps.

Said molecular weight distribution index is defined as the ratio between the weight-average molecular weight (M_{w}) and the number-average molecular weight (Mₙ) and may be determined according to conventional techniques such as, for example, by means of gel permeation chromatography (GPC).

Polyolefin waxes (b) which may be used according to the present invention may be selected, for example, from: polyethylene wax obtained by pyrolysis of a high molecular weight polyethylene; polyethylene wax obtained by radical polymerization of ethylene at a high pressure; polyethylene wax obtained by medium, low pressure polymerization of ethylene with the α-olefin mentioned above in the presence of a transition metal catalyst; polyethylene wax; ethylene/α-olefin copolymer waxes; polypropylene wax; poly-1-butene wax; or mixtures thereof. Polyethylene wax, or ethylene/α-olefin copolymer waxes, are particularly preferred.

Examples of polyolefin waxes (b) which may be used in the present invention and which are currently commercially available are the products SP94 and SP96 from Baslini S.p.A.

According to one preferred embodiment, said at least one copolymer of ethylene (c), has a molecular weight distribution (MWD) index of less than 5, preferably between 1.5 and 3.5, and a melting enthalpy (ΔHₘ) of not less than 30 J/g, preferably between 34 J/g and 130 J/g.

Said molecular weight distribution index is defined as the ratio between the weight-average molecular weight (M_{w}) and the number-average molecular weight (Mₙ) and may be determined according to conventional techniques such as, for example, by means of gel permeation chromatography (GPC).

Said melting enthalpy (ΔHₘ) may be determined by Differential Scanning Calorimetry and relates to the melting peaks detected in the temperature range from 0°C to 200°C.

With reference to the copolymer of ethylene (c), the term "aliphatic α-olefin" generally means an olefin of formula CH₂=CH-R, in which R represents a linear or branched alkyl group containing from 1 to 12 carbon atoms. Preferably, the aliphatic α-olefin is selected from propylene, 1-butene, isobutylene, 1-pentene, 4-methyl-1-pentene, 1-hexene, 1-octene, 1-dodecene, or mixtures thereof. 1-octene is particularly preferred.

With reference to the copolymer of ethylene (c), the term "polyene" generally means a conjugated or non-conjugated diene, triene or tetraene. When a diene comonomer is present, this comonomer generally contains from 4 to 20 carbon atoms and is preferably selected from: linear conjugated or non-conjugated diolefins such as, for example, 1,3-butadiene, 1,4-hexadiene, 1,6-octadiene, and the like; monocyclic or polycyclic dienes such as, for example, 1,4-cyclohexadiene, 5-ethylidene-2-norbornene, 5-methylene-2-norbornene, vinylnorbornene, or mixtures thereof. When a triene or tetraene comonomer is present, this comonomer generally contains from 9 to 30 carbon atoms and is preferably selected from trienes or tetraenes containing a vinyl group in the molecule or a 5-norbornen-2-yl group in the molecule. Specific examples of triene or tetraene comonomers which may be used in the present invention are: 6,10-dimethyl-1,5,9-undecatriene, 5,9-dimethyl-1,4,8-decatriene, 6,9-dimethyl-1,5,8-decatriene, 6,8,9-trimethyl-1,6,8-decatriene, 6,10,14-trimethyl-1,5,9,13-pentadecatetraene, or mixtures thereof. Preferably, the polyene is a diene.

According to another preferred embodiment, said copolymer of ethylene (c) is characterized by:
- a density of between 0.86 g/cm³ and 0.93 g/cm³, preferably between 0.86 g/cm³ and 0.89 g/cm³;
- a Melt Flow Index (MFI), measured according to ASTM standard D1238-00, of between 0.1 g/10 min and 35 g/10 min, preferably between 0.5 g/10 min and 20 g/10 min;
- a melting temperature (Tₘ) of not less than 30°C, preferably between 50°C and 120°C, even more preferably between 55°C and 110°C.

The copolymer of ethylene (c) generally has the following composition: 50 mol%-98 mol%, preferably 60 mol%-93 mol%, of ethylene; 2 mol%-50 mol%, preferably 7 mol%-40 mol%, of an aliphatic α-olefin; 0 mol%-5 mol%, preferably 0 mol%-2 mol%, of a polyene.

The copolymer of ethylene (c) may be obtained by copolymerization of ethylene with an aliphatic α-olefin, in the presence of a single-site catalyst such as, for example, a metallocene catalyst or of a constrained geometry catalyst.

Metallocene catalysts which may be used in the polymerization of olefins are, for example, coordination complexes between a transition metal, usually from group IV, in particular titanium, zirconium or hafnium, and two optionally substituted cyclopentadienyl ligands, which are used in combination with a co-catalyst, for example an aluminoxane, preferably methylaluminoxane, or a boron compound (see, for example, Adv. Organomet. Chem, Vol. 18, p. 99, (1980); Adv. Organomet. Chem, Vol. 32, p. 325, (1991); J.M.S. - Rev. Macromol. Chem. Phys., Vol. C34(3), pp. 439-514, (1994); J. Organometallic Chemistry, Vol. 479, pp. 1-29, (1994); Angew. Chem. Int., Ed. Engl., Vol. 34, p. 1143, (1995); Prog. Polym. Sci., Vol. 20, p. 459 (1995); Adv. Polym. Sci., Vol. 127, p. 144, (1997); patent US 5 229 478, or patent applications WO 93/19107, EP 35 342, EP 129 368, EP 277 003, EP 277 004, EP 632 065).

Constrained geometry catalysts which may be used in the polymerization of olefins are, for example, coordination complexes between a metal, usually from groups 3-10 or from the Lanthanide series, and a single, optionally substituted cyclopentadienyl ligand, which are used in combination with a co-catalyst, for example an aluminoxane, preferably methylaluminoxane, or a boron compound (see, for example, Organometallics, Vol. 16, p. 3649, (1997); J. Am. Chem. Soc., Vol. 118, p. 13021, (1996); J. Am. Chem. Soc., Vol. 118, p. 12451, (1996); J. Organometallic Chemistry, Vol. 482, p. 169, (1994); J. Am. Chem. Soc., Vol. 116, p. 4623, (1994); Organometallics, Vol. 9, p. 867, (1990); patents US 5 096 867, US 5 414 040, or patent applications WO 92/00333, WO 97/15583, WO 01/12708, EP 416 815, EP 418 044, EP 420 436, EP 514 828.

The synthesis of the copolymers of ethylene (c) in the presence of metallocene catalysts is described, for example, in patent application EP 206 794, or in Metallocene-based polyolefins, Vol. 1, Wiley series in Polymer Science, p. 309, (1999).

The synthesis of copolymers of ethylene (c) in the presence of constrained geometry catalysts is described, for example, in Macromol. Chem. Rapid. Commun., Vol. 20, p. 214-218, (1999); Macromolecules, Vol. 31, p. 4724 (1998); Macromolecules Chem. Phys., Vol. 197, p. 4237 (1996); or in patent application WO 00/26268; or in patent US 5 414 040.

Examples of copolymers of ethylene (c) which may be used in the present invention and which are currently commercially available are the products Engage® from DuPont-Dow Elastomers and Exact® from Exxon Chemical.

With reference to the thermoplastic polymers (d), in the present description and claims, by the expression "thermoplastic polymer having a main hydrocarbon chain to which hydrophilic groups are linked" [for the sake of brevity also "hydrophilic polymer (d)"] it is meant a synthetic polymer wherein hydrophilic groups, either directly or through side groups, are linked to the main hydrocarbon chain, either linear or branched, and free from glycoside bonds. As known, glycoside bonds are ether bonds, cleavable by hydrolysis, deriving from polycondensation of monosaccharides, which are typically present in polysaccharides such as starch and cellulose.

In the present description and claims, by "hydrophilic groups" it is meant groups which are able to bind water molecules by means of hydrogen bonds.

According to one preferred embodiment, said hydrophilic groups may be selected, for example, from:
- hydroxyl groups -OH;
- carboxylic groups -COOH, possibly at least partially in the salt form;
- ester groups -COOR (R = alkyl or hydroxyalkyl);
- amide groups -CONH₂;
- sulfonic groups -SO₃H, possibly at least partially in the salt form.

Preferably, the hydrophilic polymers (d) according to the present invention are capable to absorb at least 0.1% by weight of water based on the polymer weight, after a 24-hour exposure in an environment having a 50% relative humidity at the temperature of 24°C (measured according to ASTM standard D570).

Preferably, the hydrophilic polymers (d) according to the present invention are thermoplastic products having a melting temperature lower than 230°C, preferably between 200°C and 130°C.

According to one preferred embodiment, the hydrophilic polymers (d) may be selected, for example, from: polyacrylic acid, polymethacrylic acid, polyhydroxyalkylacrylate, polyalkylacrylate, polyacrylamide, acrylamide/acrylic acid copolymers, polyvinylalcohol, polyvinylacetate, vinylalcohol/vinylacetate copolymers, ethylene/vinylacetate copolymers, ethylene/vinylalcohol copolymers, ethylene/vinylalcohol/vinylacetate terpolymers, polyvinyl-sulfonic acid, polystyrene sulfonate, or mixtures thereof.

According to a particularly preferred embodiment, said hydrophilic polymers (d) comprise repeating units having the following formula (II): 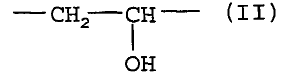 with a random or block distribution along the chain.

This preferred class of hydrophilic polymers (d) encompasses: polyvinylalcohol, ethylene/vinylalcohol copolymers, ethylene/vinylalcohol/vinylacetate terpolymers. Polymers may also be used wherein the groups of formula (II) have been at least partially modified, for instance by partial acetylation with aliphatic aldehydes (as described, for example, in patent US 4 002 796).

The following hydrophilic polymers (d) are particularly preferred:
(i) vinylalcohol polymers obtained by hydrolysis of polyvinylacetate, with a hydrolysis degree comprised between 50 mol% and 100 mol%, preferably between 70 mol% and 90 mol%;
(ii) ethylene/vinylalcohol copolymers having a content of ethylene units generally comprised between 20 mol% and 60 mol%, preferably between 25 mol% and 50 mol%.

Examples of copolymers of type (i) which may be used in the present invention and which are currently commercially available are the products Mowiol® from Clariant, Gohsenol® from Nippon Gohsei, Elvanol® from Du Pont, Airvol® from Air Products.

Examples of copolymers of type (ii) which may be used in the present invention and which are currently commercially available are the products Soarnol® from Atochem.

With regard to the fatty acid esters (e), the saturated fatty acid may be selected, for example, from: capric acid, lauric acid, myristic acid, palmitic acid, stearic acid, 12-hydroxystearic acid, behenic acid, or mixtures thereof. Stearic acid is preferred.

The unsaturated fatty acid may be selected, for example, from: undecylenic acid, oleic acid, erucic acid, sorbic acid, linoleic acid, linolenic acid, arachidonic acid, propiolic acid, stearolic acid, or mixtures thereof.

The polyhydric alcohol may be selected, for example, from: ethylene glycol, diethylene glycol, triethylene glycol, propylene glycol, dipropylene glycol, butanediol, pentanediol, hexanediol, glycerin, diglycerin, triglycerin, pentaerythritol, sorbitan, sorbitol, mannitol, or mixtures thereof. Glycerine is preferred.

Examples of fatty acid esters (e) which may be used in the present invention and which are currently commercially available are the products Ligalub® from Peter Greven Fett-Chemie.

The elongational viscosity reducing additives above disclosed may be added to the elastomeric composition according to the present invention as such or dispersed in a polymeric carrier so as to obtain a product in subdivided form (see, for example, the International Patent Application WO 02/083783 in the name of the same Applicant).

According to one preferred embodiment, the elongational viscosity reducing additive is present in the elastomeric composition in an amount of from 0.1 phr to 10 phr, preferably from 2 phr to 5 phr.

For the purposes of the present description and of the claims, the term "phr" means the parts by weight of a given component of the elastomeric composition per 100 parts by weight of the elastomeric polymer.

The elastomeric composition according to the present invention, also comprises at least one diene elastomeric polymer (f) which may be selected from those commonly used in sulphur-crosslinkable elastomeric compositions, that are particularly suitable for producing tyres, that is to say from elastomeric polymers or copolymers with an unsaturated chain having a glass transition temperature (Tg) generally below 20°C, preferably in the range of from 0°C to -90°C. These polymers or copolymers may be of natural origin or may be obtained by solution polymerization, emulsion polymerization or gas-phase polymerization of one or more conjugated diolefins, optionally blended with at least one comonomer selected from monovinylarenes and/or polar comonomers in an amount of not more than 60% by weight.

The conjugated diolefins generally contain from 4 to 12, preferably from 4 to 8 carbon atoms, and may be selected, for example, from the group comprising: 1,3-butadiene, isoprene, 2,3-dimethyl-1,3-butadiene, 1,3-pentadiene, 1,3-hexadiene, 3-butyl-1,3-octadiene, 2-phenyl-1,3-butadiene, or mixtures thereof. 1,3-butadiene and isoprene are particularly preferred.

Monovinylarenes which may optionally be used as comonomers generally contain from 8 to 20, preferably from 8 to 12 carbon atoms, and may be selected, for example, from: styrene; 1-vinylnaphthalene; 2-vinylnaphthalene; various alkyl, cycloalkyl, aryl, alkylaryl or arylalkyl derivatives of styrene such as, for example, α-methylstyrene, 3-methylstyrene, 4-propylstyrene, 4-cyclohexylstyrene, 4-dodecylstyrene, 2-ethyl-4-benzylstyrene, 4-p-tolylstyrene, 4-(4-phenylbutyl)styrene, or mixtures thereof. Styrene is particularly preferred.

Polar comonomers which may optionally be used may be selected, for example, from: vinylpyridine, vinylquinoline, acrylic acid and alkylacrylic acid esters, nitriles, or mixtures thereof, such as, for example, methyl acrylate, ethyl acrylate, methyl methacrylate, ethyl methacrylate, acrylonitrile, or mixtures thereof.

Preferably, the diene elastomeric polymer (f) which may be used in the present invention may be selected, for example, from: cis-1,4-polyisoprene (natural or synthetic, preferably natural rubber), 3,4-polyisoprene, polybutadiene (in particular polybutadiene with a high 1,4-cis content), optionally halogenated isoprene/isobutene copolymers, 1,3-butadiene/acrylonitrile copolymers, styrene/1,3-butadiene copolymers, styrene/isoprene/1,3-butadiene copolymers, styrene/1,3-butadiene/acrylonitrile copolymers, or mixtures thereof.

The elastomeric composition according to the present invention may optionally comprise at least one elastomeric polymer of one or more monoolefins with an olefinic comonomer or derivatives thereof (g). The monoolefins may be selected from: ethylene and α-olefins generally containing from 3 to 12 carbon atoms, such as, for example, propylene, 1-butene, 1-pentene, 1-hexene, 1-octene, or mixtures thereof. The following are preferred: copolymers between ethylene and an α-olefin, optionally with a diene; isobutene homopolymers or copolymers thereof with small amounts of a diene, which are optionally at least partially halogenated. The diene optionally present generally contains from 4 to 20 carbon atoms and is preferably selected from: 1,3-butadiene, isoprene, 1,4-hexadiene, 1,4-cyclohexadiene, 5-ethylidene-2-norbornene, 5-methylene-2-norbornene, vinylnorbornene, or mixtures thereof. Among these, the following are particularly preferred: ethylene/propylene copolymers (EPR) or ethylene/propylene/diene copolymers (EPDM); polyisobutene; butyl rubbers; halobutyl rubbers, in particular chlorobutyl or bromobutyl rubbers; or mixtures thereof.

A diene elastomeric polymer (f) or an elastomeric polymer (g) functionalized by reaction with suitable terminating agents or coupling agents may also be used. In particular, the diene elastomeric polymers obtained by anionic polymerization in the presence of an organometallic initiator (in particular an organolithium initiator) may be functionalized by reacting the residual organometallic groups derived from the initiator with suitable terminating agents or coupling agents such as, for example, imines, carbodiimides, alkyltin halides, substituted benzophenones, alkoxysilanes or aryloxysilanes (see, for example, European patent EP 451 604, or patents US 4 742 124 and US 4 550 142).

At least one reinforcing filler may advantageously be added to the elastomeric composition according to the present invention, in an amount generally of from 0.1 phr to 120 phr, preferably from 20 phr to 90 phr. The reinforcing filler may be selected from those commonly used for crosslinked manufactured products, in particular for tyres, such as, for example, carbon black, silica, alumina, aluminosilicates, calcium carbonate, kaolin, or mixtures thereof.

The types of carbon black which may be used according to the present invention may be selected from those conventionally used in the production of tyres, generally having a surface area of not less than 20 m²/g (determined by CTAB absorption as described in ISO standard 6810).

The silica which may be used according to the present invention may generally be a pyrogenic silica or, preferably, a precipitated silica, with a BET surface area (measured according to ISO standard 5794/1) of from 50 m²/g to 500 m²/g, preferably from 70 m²/g to 200 m²/g.

When a reinforcing filler comprising silica is present, the elastomeric composition may advantageously incorporate at least one coupling agent capable of interacting with the silica and of linking it to the diene elastomeric polymer during the vulcanization.

Coupling agents that are preferably used are those based on silane which may be identified, for example, by the following structural formula (III):

(R)₃Si-CₙH₂ₙ-X (III)

in which the groups R, which may be identical or different, are selected from: alkyl, alkoxy or aryloxy groups or from halogen atoms, on condition that at least one of the groups R is an alkoxy or aryloxy group; n is an integer between 1 and 6 inclusive; X is a group selected from: nitroso, mercapto, amino, epoxide, vinyl, imide, chloro, -(S)ₘCₙH₂ₙ-Si-(R)₃ in which m and n are integers between 1 and 6 inclusive and the groups R are defined as above.

Among the coupling agents that are particularly preferred are bis(3-triethoxysilylpropyl) tetrasulphide and bis(3-triethoxysilylpropyl) disulphide. Said coupling agents may be used as such or as a suitable mixture with an inert filler (for example carbon black) so as to facilitate their incorporation into the elastomeric composition.

The elastomeric composition according to the present invention may be vulcanized according to known techniques, in particular with sulphur-based vulcanizing systems commonly used for diene elastomeric polymers.

The vulcanizing agent most advantageously used is sulphur, or molecules containing sulphur (sulphur donors), with accelerators and activators known to those skilled in the art.

Activators that are particularly effective are zinc compounds, and in particular ZnO, ZnCO₃, zinc salts of saturated or unsaturated fatty acids containing from 8 to 18 carbon atoms, such as, for example, zinc stearate, which are preferably formed in situ in the elastomeric composition from ZnO and fatty acid, and also BiO, PbO, Pb₃O₄, PbO₂, or mixtures thereof.

Accelerators that are commonly used may be selected from: dithiocarbamates, guanidine, thiourea, thiazoles, sulphenamides, thiurams, amines, xanthates, or mixtures thereof.

The elastomeric composition according to the present invention may comprise other commonly used additives selected on the basis of the specific application for which the composition is intended. For example, the following may be added to said composition: antioxidants, anti-ageing agents, adhesives, anti-ozone agents, modifying resins, fibres (for example Kevlar® pulp), or mixtures thereof.

The process for preparing a crosslinkable elastomeric composition according to the present invention may be carried out continuously or discontinuosly.

When said process is carried out continuously, the mixing of the diene elastomeric polymer (f) with the elongational viscosity reducing additive and with the other components optionally present is carried out, for example, in continuous mixers such as a Ko-Kneader mixer (Buss) or in co-rotating or counter-rotating twin-screw extruders or in single-screw extruders.

When the process is carried out discontinuosly, the mixing of the diene elastomeric polymer (f) with the elongational viscosity reducing additive and with the other components optionally present is carried out, for example, using an open internal mixer such as an open mill, or an internal mixer of the type with tangential rotors (Banbury) or with interlocking rotors (Intermix).

During the mixing, the temperature is kept below a predetermined value so as to avoid premature crosslinking of the composition. To this end, the temperature is generally kept below 170°C, preferably below 150°C, even more preferably below 120°C. As regards the mixing time, this may vary within a wide range, depending mainly on the specific composition of the mixture, on the presence of reinforcing fillers and on the type of mixer used. In general, a mixing time of more than 10 seconds, preferably between 30 seconds and 35 minutes is sufficient to obtain a homogeneous composition.

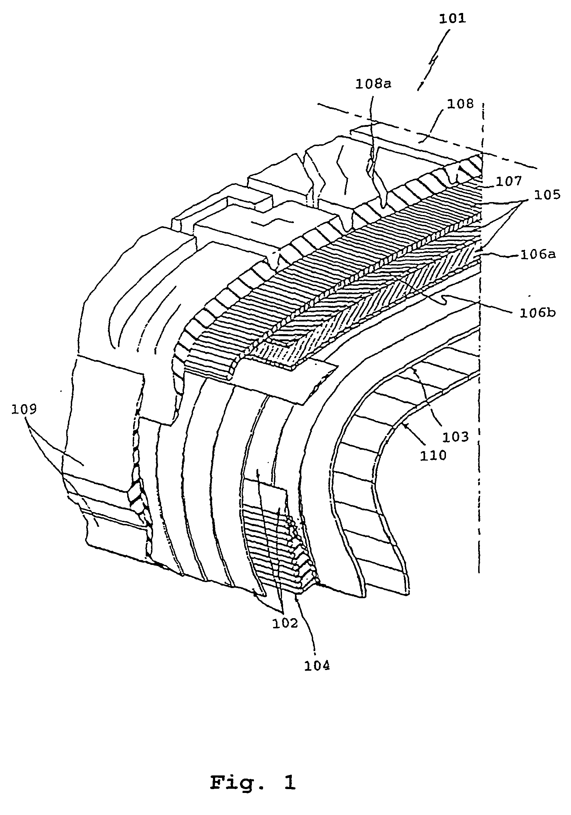

The present invention will now be illustrated in further detail by means of a number of illustrative embodiments, with reference to the attached Fig. 1 which is a view in cross section of a portion of a tyre made according to the invention.

With reference to Fig. 1, the tyre (101) essentially comprises a carcass structure (102) having at least a first carcass ply (103) shaped in a substantially toroidal configuration and engaged, by means of its opposite circumferential edges, to a pair of inextensible annular structures (104) commonly known as "bead wires" which, once the tyre is finished, are located in the zone usually referred to as the bead. The opposite lateral edges of the abovementioned carcass ply (103) are coupled with respective bead wires (104). Alternatively, coupling between the carcass ply (103) and the bead wires (104) may be achieved by folding back the opposite lateral edges of the carcass ply (103) around the bead wires (104), so as to form the abovementioned carcass back-folds (not shown in Fig. 1).

The carcass ply (103) generally consists of a plurality of reinforcing cords arranged parallel to each other and at least partially coated with a layer of elastomeric material. These reinforcing cords are usually made of textile fibres, for example rayon, nylon or polyethylene terephthalate, or of steel wires which are stranded together, coated with a metal alloy (for example copper/zinc, zinc/manganese or zinc/molybdenum/cobalt alloys, and the like).

The carcass ply (103) is usually of radial type, i.e. it incorporates reinforcing cords arranged in a substantially perpendicular direction relative to a circumferential direction.

A belt structure (105) comprising one or more belt strips (106a), (106b) and (107) is applied to the carcass structure (102), in a circumferentially external position. In the specific embodiment of Fig. 1, the belt structure (105) comprises two belt strips (106a) and (106b), which incorporate a plurality of reinforcing cords, typically metal cords, parallel to each other in each strip and oblique with respect to the adjacent strip, oriented so as to form a predetermined angle with respect to a circumferential direction. The belt structure (105) may optionally comprise at least one reinforcing layer (107) at 0° commonly known as a "0° belt", placed on the radially outermost belt strip (106b), which generally incorporates a plurality of reinforcing cords, typically textile cords, arranged at an angle of a few degrees with respect to a circumferential direction, coated and welded together by means of an elastomeric material.

A tread band (108) is superimposed circumferentially on the belt structure (105) and on it, after a moulding operation carried out concomitantly with the curing of the tyre, are made longitudinal and/or transverse grooves (108) arranged so as to define a desired "tread pattern".

The tyre (100) also comprises a pair of sidewalls (109) applied laterally to the opposite sides of the carcass structure (102). A strip made of elastomeric material (not shown in Fig. 1) commonly known as a "mini-sidewall" may optionally be present in the connecting zone between the sidewalls (109) and the tread band (108), which is generally obtained by co-extrusion with the tread band and makes it possible to improve the mechanical interaction between the tread band (108) and the sidewalls (109).

In the case of tubeless tyres, a further coating layer (not shown in Fig. 1) may also be provided in a radially internal position with respect to the carcass ply (103), over the coating layer (110) according to the present invention. This further coating layer can further ensure impermeability to a fluid for inflating the tyre when this tyre is installed on a rim and inflated.

The present invention will be further illustrated below by means of a number of preparation examples, which are given for purely indicative purposes and without any limitation of this invention.

### EXAMPLES 1-3

### Preparation of the elastomeric compositions

The elastomeric compositions given in Table 1 (the amounts of the different components are expressed in phr) were prepared as follows.

All ingredients, except sulphur and accelerators, were mixed in an internal mixer (Pomini PL 1.6 model) for about 5 minutes (1^{st} Step). As soon as the temperature of 145±5° was reached, the elastomeric composition was discharged. The sulphur and the accelerators were then added and mixing was carried out in an open mill mixer equipped with cylinders (2^{nd} Step).

**TABLE 1**

| EXAMPLE | 1 (*) | 2 | 3 |
|---|---|---|---|
| 1^{st} STEP | | | |
| S-SBR | 90 | 90 | 90 |
| BR | 35 | 35 | 35 |
| Silica | 70 | 70 | 70 |
| Zinc oxide | 2.5 | 2.5 | 2.5 |
| TESPT | 5.6 | 5.6 | 5.6 |
| Stearic acid | 2 | 2 | 2 |
| Aromatic oil | 8 | 8 | 8 |
| Microcrystalline wax | 1 | 1 | 1 |
| Antioxidant | 2 | 2 | 2 |
| Glydexx® N-10 | - | 3 | - |
| SP94 | - | - | 4 |

| 2^{nd} STEP | | | |
|---|---|---|---|
| CBS | 2 | 2 | 2 |
| DPG | 1.9 | 1.9 | 1.9 |
| Sulphur | 1.2 | 1.2 | 1.2 |

| | | | |
|---|---|---|---|
| (*): comparative. | | | |
| S-SBR: styrene/butadiene copolymer, obtained by solution polymerization, containing 25% by weight of styrene, mixed with 37.5 phr of oil (Buna® 5025 - Bayer); | | | |
| BR: cis-1,4-polybutadiene (Europrene® BR 40 - EniChem Elastomeri); | | | |
| Silica: precipitated silica (Zeosil® 1165 MP - Rhône-Poulenc); | | | |
| TESPT: bis(3-triethoxysilylpropyl)tetrasulfide (X50S comprising 50% of carbon black and 50% of silane - Degussa-Hüls - the reported amount relates to the silane amount); | | | |
| Antioxidant: N-1,3-dimethylbutyl-N'-phenyl-p-phenylenediamine; | | | |
| Glydexx® N-10: glycidyl neodecanoate (Exxon Mobil Chemical); | | | |
| SP94: polyethylene wax from Baslini S.p.A.; | | | |
| CBS (accelerator): N-cyclohexyl-2-benzotiazylsulfenamide (Vulkacit® CZ - Bayer); | | | |
| DPG (accelerator): N-N'-diphenylguanidine. | | | |

The Mooney viscosity ML(1+4) at 100°C was measured, according to ISO standard 289/1, on the non-crosslinked compositions obtained as described above. The results obtained are given in Table 2.

Said elastomeric compositions were also submitted to a MDR rheometric analysis using a MDR rheometer from Monsanto, the tests being run at 170°C for 20 minutes, with an oscillation frequency of 1.66 Hz (100 oscillations per minute) and an oscillation amplitude of ±0.5° (curing properties). The static mechanical properties according to ISO standard 37 as well as hardness in IRHD degrees at 23°C and at 100°C according to ISO standard 48 were measured on samples of said elastomeric compositions cross-linked at 170°C for 10 minutes. The results obtained are given in Table 2.

Also given in Table 2 are the dynamic mechanical properties measured using an Instron dynamic device in the traction-compression mode according to the following methods. A test piece of the crosslinked material having a cylindrical form (length = 25 mm; diameter = 14 mm) compression-preloaded up to 10% longitudinal deformation with respect to the initial length and kept at the prefixed temperature (23°C or 70°C) for the whole duration of the test, was submitted to a dynamic sinusoidal strain with an amplitude ±3.33% with respect to the length under pre-load, with a frequency of 100 Hz. The dynamic mechanical properties are expressed in terms of dynamic elastic modulus (E') and tandelta (loss factor) values. As is known, the tandelta value is calculated as a ratio between the viscous modulus (E") and the elastic modulus (E'), both of them being determined with the above dynamic measurements.

Also given in Table 2 are the elongational viscosities measured according to ASTM standard D5099-93 as follows.

The compositions obtained as disclosed above were subjected to capillary rheometric analysis using a Göttfert laboratory rheometer Rheograph 6000 type equipped with three capillaries having 1 mm internal diameter and different lengths: 10 mm, 20 mm and 30 mm, respectively. For this purpose, test pieces of the composition having a cylindrical form (length = 50 cm; diameter = 6 mm) were obtained by extrusion utilizing a Bandera laboratory extruder Garvey type having a length/diameter ratio L/D = 10 and a twin screw speed of 80 rpm. The extruder was thermostated at 90°C.

The obtained test pieces, three for each elastomeric compositions, were pushed by means of a piston in the three capillaries, operating at a temperature of 120°C, at a predetermined shear rates (the shear rates values (s⁻¹) are given in Table 2): the elongational viscosity was measured and the average of the three measures was given in Table 2.

**TABLE 2**

| EXAMPLE | 1 (*) | 2 | 3 |
|---|---|---|---|
| Mooney viscosity ML (1+4) | 77 | 59 | 64 |

| STATIC MECHANICAL PROPERTIES | | | |
|---|---|---|---|
| Stress at break (MPa) | 15.4 | 14.7 | 14.0 |
| Elongation at break (%) | 399 | 414 | 386 |

| DYNAMIC MECHANICAL PROPERTIES | | | |
|---|---|---|---|
| E' (23°C) | 8.1 | 8.2 | 7.5 |
| E' (70°C) | 5.8 | 5.9 | 5.4 |
| Tandelta (23°C) | 0.264 | 0.272 | 0.272 |
| Tandelta (70°C) | 0.131 | 0.113 | 0.129 |

| CURING PROPERTIES | | | |
|---|---|---|---|
| MH (dN m) | 20.1 | 20.5 | 19.6 |
| t30 (min) | 1.8 | 1.9 | 1.8 |
| t90 (min) | 3.4 | 3.8 | 3.2 |

| ELONGATIONAL VISCOSITY (Pa s) | | | |
|---|---|---|---|
| 1786 ^{s-1} | 339 | 278 | 285 |
| 2554 s⁻¹ | 260 | 213 | 216 |
| 3711 s⁻¹ | 195 | 172 | 162 |
| 5938 s⁻¹ | 145 | 128 | 128 |
| IRHD Hardness (23°C) | 74 | 73 | 72 |
| IRHD Hardness (100°C) | 65 | 66 | 64 |

| | | | |
|---|---|---|---|
| (*): comparative. | | | |

### EXAMPLES 4-6

### Preparation of the elastomeric compositions

The elastomeric compositions given in Table 3 (the amounts of the various components are expressed in phr) were prepared by mixing together the elastomeric polymer (NR), the carbon black (N375) and the phenolic resin in a tangential internal mixer for about 5 minutes, reaching a final temperature of about 150°C. Next, said compositions were discharged from the internal mixer, introduced into a laboratory open-mill blender and the other components (given in Table 3) were added: the whole was mixed for about 3 minutes at 100°C.

**TABLE 3**

| EXAMPLE | 4 (*) | 5 | 6 |
|---|---|---|---|
| NR | 100 | 100 | 100 |
| N375 | 75 | 75 | 75 |
| Zinc oxide | 10 | 10 | 10 |
| Stearic acid | 2 | 2 | 2 |
| Aromatic oil | 2.4 | 2.4 | 2.4 |
| Phenolic resin | 18 | 18 | 18 |
| Cobalt naphthenate | 5.7 | 5.7 | 5.7 |
| Antioxidant | 1 | 1 | 1 |
| SP94 | - | 4 | - |
| Engage® 8150 | - | - | 4 |
| TBBS | 1 | 1 | 1 |
| Sulphur | 7 | 7 | 7 |
| Retardant | 0.4 | 0.4 | 0.4 |

| | | | |
|---|---|---|---|
| (*): comparative. | | | |
| NR: natural rubber; | | | |
| N375: carbon black (Columbian); | | | |
| Phenolic resin: octylphenolic resin (Durez® 29095 - Occidental); | | | |
| Adhesive: t-butylphenol formaldeide (Durez® 32333 - Occidental); | | | |
| Antioxidant: N-1,3-dimethylbutyl-N'-phenyl-p-phenylenediamine; | | | |
| SP94: polyethylene wax from Baslini S.p.A.; | | | |
| Engage® 8150: ethylene/1-octene weight ratio = 75/25; d = 0.868 g/cm³; MFI = 0.5 g/10 min; ΔHₘ = 34.8 J/g; Tₘ = 59.2°C) (Du Pont-Dow Elastomers); | | | |
| TBBS (accelerator): N-t-butyl-2-benzotiazylsulphenamide (Vulkacit® NZ - Bayer); | | | |
| Retardant: cyclohexylthiophthalimide (Vulkalent® G - Bayer). | | | |

The Mooney viscosity ML(1+4), the MDR rheometric analysis (curing properties), the static mechanical properties, as well as the elongational viscosities, were measured operating as disclosed in Examples 1-3. The results obtained are given in Table 4.

**TABLE 4**

| EXAMPLE | 4 (*) | 5 | 6 |
|---|---|---|---|
| Mooney viscosity ML (1+4) | 121 | 105 | 114 |

| STATIC MECHANICAL PROPERTIES | | | |
|---|---|---|---|
| Stress at break (MPA) | 12.3 | 11.5 | 12.0 |
| Elongation at break (%) | 99.9 | 100.9 | 103.7 |

| CURING PROPERTIES | | | |
|---|---|---|---|
| MH (dN m) | 103.6 | 96.8 | 96.0 |
| t30 (min) | 2.21 | 2.23 | 2.20 |
| t90 (min) | 9.76 | 9.71 | 9.43 |

| ELONGATIONAL VISCOSITY (Pa s) | | | |
|---|---|---|---|
| 1456 ^{s-1} | 615.7 | 525.0 | 550.0 |
| 1974 s⁻¹ | 528.2 | 416.7 | 475.0 |
| 2986 s⁻¹ | 454.4 | 330.0 | 401.2 |
| 4777 s⁻¹ | 378.1 | 223.0 | 327.3 |
| Shore D Hardness (23°C) | 54 | 52 | 52 |
| Shore D Hardness (100°C) | 45 | 44 | 44 |

| | | | |
|---|---|---|---|
| (*): comparative. | | | |

### EXAMPLE 7

The elastomeric compositions of Example 1 (without elongational viscosity reducing additive) and Example 2 (according to the present invention) were fed to a single-screw extruder having a nominal screw diameter of 70 mm and a L/D ratio of 8.4, operating at an extrusion temperature of 130°C, at a shear rate of 5000 s⁻¹. Strips 25 mm wide and 3 mm thick were obtained which present:
- irregular edges and rough surface in the case of Example 1;
- regular edges and smooth surface in the case of Example 2.

The strip obtained utilizing the elastomeric composition of Example 2 was used in order to make a tyre by means of a process according to the present invention.

## Claims

1. Process for producing a tyre, which includes:
- feeding an elastomeric composition to an extruder;
- forming by extrusion said elastomeric composition as a continuous elongated element;
- depositing said continuous elongated element on a support in a plurality of coils to make up a structural element of a tyre;
wherein the step of forming is carried out at a shear rate of at least 1000 s⁻¹ and the elastomeric composition comprises at least one elongational viscosity reducing additive in an amount so that elongational viscosity of said elastomeric composition, measured at 120°C, at the shear rate of the forming step, is at least 10% lower with respect to the elongational viscosity, measured in the same conditions, of the elastomeric composition devoid of said additive.

2. Process for producing a tyre according to claim 1, wherein the elongational viscosity of the elastomeric composition, measured at 120°C, at the shear rate of the forming step, is 15% lower with respect to the elongational viscosity, measured in the same conditions, of the elastomeric composition devoid of said additive.

3. Process for producing a tyre according to claim 1 or 2, wherein the elongational viscosity of the elastomeric composition, measured at 120°C, at the shear rate of the forming step, is not lower than 50% with respect to the elongational viscosity, measured in the same conditions, of the elastomeric composition devoid of said additive.

4. Process for producing a tyre according to any one of the preceding claims, wherein the support is a rotating support.

5. Process for producing a tyre according to any one of the preceding claims, wherein the support is a rigid support.

6. Process for producing a tyre according to claim 5, wherein the rigid support has a toroidal shape.

7. Process for producing a tyre according to any one of the preceding claims, wherein the process is carried out with a drawing ratio (K) higher than 1.

8. Process for producing a tyre according to claim 7, wherein the drawing ratio (K) is higher than 1.5.

9. Process for producing a tyre according to any one of the preceding claims, wherein the forming step is carried out at a shear rate of between 2000 s⁻¹ and 8000 s⁻¹.

10. Process for producing a tyre according to claim 9, wherein the forming step is carried out at a shear rate of between 4000 s⁻¹ and 6000 s⁻¹.

11. Process for producing a tyre according to any one of the preceding claims, wherein the elongational viscosity reducing additive is selected from:
(a) glycidyl esters of an α-branched carboxylic acid containing from 6 to 22 carbon atoms;
(b) polyolefin waxes;
(c) copolymers of ethylene with at least one aliphatic α-olefin, and optionally a polyene;
(d) thermoplastic polymers having a main hydrocarbon chain to which hydrophilic groups are linked;
(e) fatty acid esters derived from at least one saturated or unsaturated fatty acid having from 8 to 24 carbon atoms and at least one polyhydric alcohol having from 2 to 6 carbon atoms.

12. Process for producing a tyre according to claim 11, wherein the glycidyl esters (a) are selected from those having the following general formula (I): 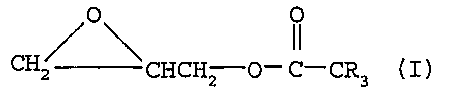 wherein the R groups, equal or different from each others, represent hydrogen or linear or branched aliphatic groups, with the provisio that the R groups have a total number of carbon atoms of from 6 to 18.

13. Process for producing a tyre according to claim 11, wherein the polyolefin waxes (b) are selected from homopolymers of an α-olefin or copolymers of at least two α-olefin such as ethylene, propylene, 1-butene, 1-hexene, 4-methyl-1-pentene, 1-decene, or mixtures thereof, having an intrinsic viscosity (η), measured at 135°C in decalin, of between 0.03 dl/g to 1.0 dl/g.

14. Process for producing a tyre, according to claim 13, wherein the polyolefin waxes (b) have a molecular weight distribution (MWD) index of less than 5.

15. Process for producing a tyre, according to claim 13 or 14, wherein the polyolefin waxes (b) have a number-average molecular weight of less than 4000.

16. Process for producing a tyre, according to any one of claims 13 to 15, wherein the polyolefin waxes (b) have a melting point (Tₘ) of less than 140°C.

17. Process for producing a tyre, according to any one of claims 13 to 16, wherein the polyolefin waxes (b) have a viscosity at 140°C, measured according to ASTM standard D3236-88, of less than 160 cps.

18. Process for producing a tyre, according to any one of claims 13 to 17, wherein the polyolefin waxes (b) are polyethylene wax, or ethylene α-olefin copolymer waxes.

19. Process for producing a tyre, according to claim 11, wherein the copolymer of ethylene (c), has a molecular weight distribution (MWD) index of less than 5 and a melting enthalpy (ΔHₘ) of not less than 30 J/g.

20. Process for producing a tyre according to claim 19, wherein in the copolymer of ethylene (c) the aliphatic α-olefin is an olefin of formula CH₂=CH-R, in which R represents a linear or branched alkyl group containing from 1 to 12 carbon atoms.

21. Process for producing a tyre according to claim 20, wherein the aliphatic α-olefin is selected from propylene, 1-butene, isobutylene, 1-pentene, 4-methyl-1-pentene, 1-hexene, 1-octene, 1-dodecene, or mixtures thereof.

22. Process for producing a tyre according to claim 21, wherein the aliphatic α-olefin is 1-octene.

23. Process for producing a tyre according to any one of claims 19 to 22, wherein the polyene is a conjugated or non-conjugated diene, triene or tetraene.

24. Process for producing a tyre according to claim 23, wherein the polyene is a diene.

25. Process for producing a tyre according to any one of claims 19 to 24, wherein the copolymer of ethylene (c) has a density of between 0.86 g/cm³ and 0.93 g/cm³.

26. Process for producing a tyre according to any one of claims 19 to 25, wherein the copolymer of ethylene (c) has a Melt Flow Index (MFI), measured according to ASTM standard D1230-00, of between 0.1 g/10 min and 35 g/10 min.

27. Process for producing a tyre according to any one of claims 19 to 26, wherein the copolymer of ethylene (c) has a melting point of not less than 30°C.

28. Process for producing a tyre according to claim 11, wherein in the hydrophilic polymers (d) the hydrophilic groups are selected from:
- hydroxyl groups -OH;
- carboxylic groups -COOH, possibly at least partially in the salt form;
- ester groups -COOR (R = alkyl or hydroxyalkyl);
- amide groups -CONH₂;
- sulfonic groups -SO₃H, possibly at least partially in the salt form.

29. Process for producing a tyre according to claim 28, wherein the hydrophilic polymers (d) are capable of absorbing at least 0.1% by weight of water based on the polymer weight after a 24-hour exposure in an environment having a 50% relative humidity at the temperature of 24°C (measured according to ASTM standard D570).

30. Process for producing a tyre according to claim 28 or 29, wherein the hydrophilic polymers (d) have a melting temperature lower than 230°C.

31. Process for producing a tyre according to any one of claims 28 to 30, wherein the hydrophilic polymers (d) are selected from: polyacrylic acid, polymethacrylic acid, polyhydroxy-alkylacrylate, polyalkylacrylate, polyacrylamide, acrylamide/acrylic acid copolymers, polyvinylalcohol, polyvinylacetate, vinylalcohol/vinylacetate copolymers, ethylene/vinylacetate copolymers, ethylene/vinylalcohol copolymers, ethylene/vinylalcohol/vinylacetate terpolymers, polyvinylsulfonic acid, polystyrene sulfonate, or mixtures thereof.

32. Process for producing a tyre according to any one of claims 28 to 31, wherein the hydrophilic polymers (d) comprise repeating units having the following formula (II) : 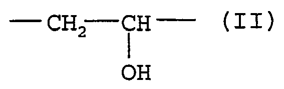 with a random or block distribution along the chain.

33. Process for producing a tyre according to any one of claims 28 to 32, wherein the hydrophilic polymers (d) are selected from:
(i) vinylalcohol polymers obtained by hydrolysis of polyvinylacetate, with a hydrolysis degree comprised between 50 mol% and 100 mol%;
(ii) ethylene/vinylalcohol copolymers having a content of ethylene units comprised between 20 mol% and 60 mol%.

34. Process for producing a tyre according to claim 11, wherein in the fatty acid esters (e), the saturated fatty acid are selected from: capric acid, lauric acid, myristic acid, palmitic acid, stearic acid, 12-hydroxystearic acid, behenic acid, or mixtures thereof.

35. Process for producing a tyre according to claim 34, wherein the saturated fatty acid is stearic acid.

36. Process for producing a tyre according to claim 11, wherein in the fatty acid esters (e), the unsaturated fatty acid are selected from: undecylenic acid, oleic acid, erucic acid, sorbic acid, linoleic acid, linolenic acid, arachidonic acid, propiolic acid, stearolic acid, or mixtures thereof.

37. Process for producing a tyre according to any one of claim 34 to 36, wherein in the fatty acid esters (e), the polyhydric alcohol may be selected from: ethylene glycol, diethylene glycol, triethylene glycol, propylene glycol, dipropylene glycol, butanediol, pentanediol, hexanediol, glycerin, diglycerin, triglycerin, pentaerythritol, sorbitan, sorbitol, mannitol, or mixtures thereof.

38. Process for producing a tyre according to claim 37, wherein the polyhydric alcohol is glycerine.

39. Process for producing a tyre according to any one of the preceding claims, wherein the elongational viscosity reducing additive is present in the elastomeric composition in an amount of from 0.1 phr to 10 phr.

40. Process for producing a tyre according to claim 39, wherein the elongational viscosity reducing additive is present in the elastomeric composition in an amount of from 2 phr to 5 phr.

41. Process for producing a tyre according to any one of the preceding claims, wherein the elastomeric composition comprises at least one diene elastomeric polymer (f).

42. Process for producing a tyre according to claim 41, wherein the diene elastomeric polymer (f) has a glass transition temperature (Tg) below 20°C.

43. Process for producing a tyre according to claim 42, wherein the diene elastomeric polymer (f) is selected from: cis-1,4-polyisoprene, 3,4-polyisoprene, polybutadiene, optionally halogenated isoprene/isobutene copolymers, 1,3-butadiene/acrylonitrile copolymers, styrene/1,3-butadiene copolymers, styrene/isoprene/1,3-butadiene copolymers, styrene/1,3-butadiene/acrylonitrile copolymers, or mixtures thereof.

44. Process for producing a tyre according to any one of the preceding claims, wherein the elastomeric composition comprises at least one elastomeric polymer of one or more monoolefins with an olefinic comonomer or derivatives thereof (g).

45. Process for producing a tyre according to claim 44, wherein the elastomeric polymer (g) is selected from: ethylene/propylene copolymers (EPR) or ethylene/propylene/diene copolymers (EPDM); polyisobutene; butyl rubbers; halobutyl rubbers; or mixtures thereof.

46. Process for producing a tyre according to any one of the preceding claims, wherein at least one reinforcing filler is present, in an amount of between 0.1 phr and 120 phr, in the elastomeric composition.

47. Process for producing a tyre according to claim 46, wherein the reinforcing filler is carbon black.

48. Process for producing a tyre according to claim 46, wherein the reinforcing filler is silica.

49. Process for producing a tyre according to claim 48, wherein at least one coupling agent is present.

50. Method for reducing the elongational viscosity of an elastomeric composition which comprises to add to said elastomeric composition at least one elongational viscosity reducing additive in an amount so that elongational viscosity of said elastomeric composition, measured at 120°C, at a shear rate of at least 1000 s⁻¹, is at least 10% lower with respect to the elongational viscosity, measured in the same conditions, of the elastomeric composition devoid of said additive.

51. Method for reducing the elongational viscosity of an elastomeric composition according to claim 50, wherein the elongational viscosity of the elastomeric composition, measured at 120°C, at a shear rate of at least 1000 s⁻¹, is 15% lower with respect to the elongational viscosity, measured in the same conditions, of the elastomeric composition devoid of said additive.

52. Method for reducing the elongational viscosity of an elastomeric composition according to claim 50 or 51, wherein the elongational viscosity of the elastomeric composition, measured at 120°C, at a shear rate of at least 1000 s⁻¹, is not lower than 50% with respect to the elongational viscosity, measured in the same conditions, of the elastomeric composition devoid of said additive.

53. Method for reducing the elongational viscosity of an elastomeric composition according to any one of claims 50 to 52, wherein the elongational viscosity reducing additive is defined according to any one of claims 11 to 40.

54. Method for reducing the elongational viscosity of an elastomeric composition according to any one of claims 50 to 53, wherein the elastomeric composition comprises at least a diene elastomeric polymer (f) which is defined according to any one of claims 41 to 43.

55. Method for reducing the elongational viscosity of an elastomeric composition according to any one of claims 50 to 54, wherein the elastomeric composition comprises at least one elastomeric polymer of one or more monoolefins with an olefinic comonomer or derivatives thereof (g) which is defined according to claim 45.

56. Method for reducing the elongational viscosity of an elastomeric composition according to any one of claims 50 to 55, wherein the elastomeric composition comprises at least one reinforcing filler, in an amount of between 0.1 phr and 120 phr.

57. Method for reducing the elongational viscosity of an elastomeric composition according to claim 56, wherein the reinforcing filler is defined according to any one of claims 47 to 49.

## Patentansprüche

1. Verfahren zur Herstellung eines Reifens, welches
- das Zuführen einer elastomeren Masse zu einem Extruder,
- das Ausbilden eines fortlaufenden, langgestreckten Elements durch Extrusion der elastomeren Masse, und
- das Ablegen des fortlaufenden, langgestreckten Elements auf einem Träger in einer Vielzahl von Windungen zur Herstellung eines Bauelements eines Reifens aufweist, wobei
- der Schritt des Ausbildens bei einer Scherrate von mindestens 1000 s⁻¹ ausgeführt wird und
- die elastomere Masse wenigstens einen die Dehnviskosität verringernden Zusatzstoff in einer solchen Menge aufweist, dass die Dehnviskosität der elastomeren Masse gemessen bei 120°C bei der Scherrate des Ausbildungsschritts bezogen auf die Dehnviskosität gemessen bei den gleichen Bedingungen der von dem Zusatzstoff freien elastomeren Masse wenigstens 10% niedriger ist.

2. Verfahren zur Herstellung eines Reifens nach Anspruch 1, bei welchem die Dehnviskosität der elastomeren Masse gemessen bei 120°C bei der Scherrate des Ausbildungsschritts bezogen auf die Dehnviskosität gemessen bei den gleichen Bedingungen der von dem Zusatzstoff freien elastomeren Masse 15% niedriger ist.

3. Verfahren zur Herstellung eines Reifens nach Anspruch 1 oder 2, bei welchem die Dehnviskosität der elastomeren Masse gemessen bei 120°C bei der Scherrate des Ausbildungsschritts nicht niedriger als 50% bezogen auf die Dehnviskosität gemessen bei den gleichen Bedingungen der von dem Zusatzstoff freien elastomeren Zusammensetzung ist.

4. Verfahren zur Herstellung eines Reifens nach einem der vorhergehenden Ansprüche, bei welchem der Träger ein rotierender Träger ist.

5. Verfahren zur Herstellung eines Reifens nach einem der vorhergehenden Ansprüche, bei welchem der Träger ein starrer Träger ist.

6. Verfahren zur Herstellung eines Reifens nach Anspruch 5, bei welchem der starre Träger eine Torusform hat.

7. Verfahren zur Herstellung eines Reifens nach einem der vorhergehenden Ansprüche, welches bei einem Streckverhältnis (K) ausgeführt wird, das größer als 1 ist.

8. Verfahren zur Herstellung eines Reifens nach Anspruch 7, bei welchem das Streckverhältnis (K) größer als 1,5 ist.

9. Verfahren zur Herstellung eines Reifens nach einem der vorhergehenden Ansprüche, bei welchem der Ausbildungsschritt bei einer Scherrate zwischen 2000 s⁻¹ und 8000 s⁻¹ ausgeführt wird.

10. Verfahren zur Herstellung eines Reifens nach Anspruch 9, bei welchem der Ausbildungsschritt bei einer Scherrate zwischen 4000 s⁻¹ und 6000 s⁻¹ ausgeführt wird.

11. Verfahren zur Herstellung eines Reifens nach einem der vorhergehenden Ansprüche, bei welchem der die Dehnviskosität reduzierende Zusatzstoff ausgewählt wird aus
(a) Glycidylestern einer α-verzweigten Carbonsäure, die 6 bis 22 Kohlenstoffatome enthält,
(b) Polyolefinwachsen,
(c) Etylen-Copolymeren mit wenigstens einem aliphatischen α-Olefin und fakultativ einem Polyen,
(d) thermoplastischen Polymeren mit einer Kohlenwasserstoff-Hauptkette, mit der hydrophile Gruppen verbunden sind,
(e) Fettsäureestern, die von wenigstens einer gesättigten oder ungesättigten Fettsäure mit 8 bis 24 Kohlenstoffatomen und wenigstens einem Polyalkohol mit 2 bis 6 Kohlenstoffatomen stammen.

12. Verfahren zur Herstellung eines Reifens nach Anspruch 11, bei welchem die Glycidylester (a) aus denjenigen ausgewählt werden, die die folgende allgemeine Formel (I) haben: 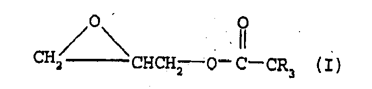 wobei die zueinander gleichen oder voneinander verschiedenen R-Gruppen Wasserstoff oder lineare oder verzweigte aliphatische Gruppen mit dem Vorbehalt darstellen, dass die R-Gruppen eine Gesamtzahl von Kohlenstoffatomen von 6 bis 18 haben.

13. Verfahren zur Herstellung eines Reifens nach Anspruch 11, bei welchem die Polyolefinwachse (b) aus Homopolymeren eines α-Olefin oder aus Copolymeren von wenigstens zwei α-Olefinen, wie Ethylen, Propylen, 1-Buten, 1-Hexen, 4-Methyl-1-Penten, 1-Decen oder Mischungen davon ausgewählt werden, die eine innere Viskosität (η) gemessen bei 135°C in Decalin von 0,03 dl/g bis 1,0 dl/g haben.

14. Verfahren zur Herstellung eines Reifens nach Anspruch 13, bei welchem die Polyolefinwachse (b) einen Molekulargewichtsverteilungs-(MWD-)Index von weniger als 5 haben.

15. Verfahren zur Herstellung eines Reifen nach Anspruch 13 oder 14, bei welchem die Polyolefinwachse (b) ein Molekulargewicht-Zahlenmittel von weniger als 4000 haben.

16. Verfahren zur Herstellung eines Reifens nach einem der Ansprüche 13 bis 15, bei welchem die Polyolefinwachse (b) einen Schmelzpunkt (Tₘ) von weniger als 140°C haben.

17. Verfahren zur Herstellung eines Reifens nach einem der Ansprüche 13 bis 16, bei welchem die Polyolefinwachse (b) eine Viskosität bei 140°C gemessen nach der Norm ASTM D3236-88 von weniger als 160 cps haben.

18. Verfahren zur Herstellung eines Reifens nach einem der Ansprüche 13 bis 17, bei welchem die Polyolefinwachse (b) Polyethylenwachs oder Ethylen-α-Olefin-Copolymerwachse sind.

19. Verfahren zur Herstellung eines Reifens nach Anspruch 11, bei welchem das Ethylencopolymer (c) einen Molekulargewichtsverteilungs-(MWD-)Index von weniger als 5 und eine Schmelzenthalpie (ΔHₘ) von nicht weniger als 30 J/g hat.

20. Verfahren zur Herstellung eines Reifens nach Anspruch 19, bei welchem in dem Ethylencopolymer (c) das aliphatische α-Olefin ein Olefin der Formel CH₂=CH-R ist, wobei R eine lineare oder verzweigte Alkylgruppe darstellt, die 1 bis 12 Kohlenstoffatome enthält.

21. Verfahren zur Herstellung eines Reifens nach Anspruch 20, bei welchem das aliphatische α-Olefin ausgewählt wird aus Propylen, 1-Buten, Isobutylen, 1-Penten, 4-Methyl-1-Penten, 1-Hexen, 1-Octen, 1-Dodecen oder Mischungen davon.

22. Verfahren zur Herstellung eines Reifens nach Anspruch 21, bei welchem das aliphatische α-Olefin 1-Octen ist.

23. Verfahren zur Herstellung eines Reifens nach einem der Ansprüche 19 bis 22, bei welchem das Polyen ein konjugiertes oder nicht konjugiertes Dien, Trien oder Tetraen ist.

24. Verfahren zur Herstellung eines Reifens nach Anspruch 23, bei welchem das Polyen ein Dien ist.

25. Verfahren zur Herstellung eines Reifens nach einem der Ansprüche 19 bis 24, bei welchem das Ethylencopolymer (c) eine Dichte von 0,86 g/cm³ bis 0,93 g/cm³ hat.

26. Verfahren zur Herstellung eines Reifens nach einem der Ansprüche 19 bis 25, bei welchem das Ethylencopolymer (c) einen Schmelzindex (MFI) gemessen nach der Norm ASTM D1230-00 von 0,1 g/10 min bis 35 g/10 min hat.

27. Verfahren zur Herstellung eines Reifens nach einem der Ansprüche 19 bis 26, bei welchem das Ethylencopolymer (c) einen Schmelzpunkt von nicht weniger als 30°C hat.

28. Verfahren zur Herstellung eines Reifens nach Anspruch 11, bei welchem bei den hydrophilen Polymeren (d) die hydrophilen Gruppen ausgewählt werden aus:
- Hydroxylgruppen -OH,
- Carboxylgruppen -COOH, wenn möglich wenigstens teilweise in der Salzform,
- Estergruppen -COOR (R = Alkyl oder Hydroxyalkyl),
- Amidgruppen -CONH₂,
- Sulfongruppen -SO₃H, wenn möglich wenigstens teilweise in der Salzform.

29. Verfahren zur Herstellung eines Reifens nach Anspruch 28, bei welchem die hydrophilen Polymere (d) in der Lage sind, wenigstens 0,1 Gew.-% Wasser basierend auf dem Polymergewicht zu absorbieren, nachdem sie 24 Stunden einer Umgebung ausgesetzt wurden, die bei der Temperatur von 24°C eine relative Feuchte von 50% hat (gemessen nach der Norm ASTM D570).

30. Verfahren zur Herstellung eines Reifens nach Anspruch 28 oder 29, bei welchem die hydrophilen Polymere (d) eine Schmelztemperatur haben, die niedriger als 230°C ist.

31. Verfahren zur Herstellung eines Reifens nach einem der Ansprüche 28 bis 30, bei welchem die hydrophilen Polymere (d) ausgewählt werden aus:
- Polyacrylsäure,
- Polymethacrylsäure,
- Polyhydroxy-Alkylacrylat,
- Polyalkylacrylat,
- Polyacrylamid,
- Acrylamid/Acrylsäure-Copolymeren,
- Polyvinylalkohol,
- Polyvinylacetat,
- Vinylalkohol/Vinylacetat-Copolymeren,
- Ethylen/Vinylacetat-Copolymeren,
- Ethylen-Vinylalkohol-Copolymeren,
- Ethylen/Vinylalkohol/Vinylacetat-Terpolymeren,
- Polyvinylsulfonsäure,
- Polystyrolsulfonat, oder
- Mischungen davon.

32. Verfahren zur Herstellung eines Reifens nach einem der Ansprüche 28 bis 31, bei welchem die hydrophilen Polymere (d) sich wiederholende Einheiten mit der folgenden Formel (II): 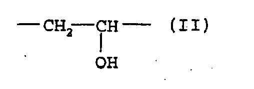 mit einer willkürlichen oder einen Blockverteilung längs der Kette aufweisen.

33. Verfahren zur Herstellung eines Reifens nach einem der Ansprüche 28 bis 32, bei welchem die hydrophilen Polymere (d) ausgewählt werden aus:
(i) Vinylalkoholpolymeren, die durch Hydrolyse von Polyvinylacetat mit einem Hydrolysegrad zwischen 50 Mol-% und 100 Mol-% erhalten werden,
(ii) Ethylen/Vinylalkohol-Copolymeren mit einem Gehalt an Ethyleneinheiten zwischen 20 Mol-% und 60 Mol-%.

34. Verfahren zur Herstellung eines Reifens nach Anspruch 11, bei welchem in den Fettsäureestem (e) die gesättigte Fettsäure ausgewählt wird aus Caprensäure, Laurensäure, Myristinsäure, Palmitinsäure, Stearinsäure, 12-Hydroxystearinsäure, Behensäure oder Mischungen davon.

35. Verfahren zur Herstellung eines Reifens nach Anspruch 34, bei welchem die gesättigte Fettsäure Stearinsäure ist.

36. Verfahren zur Herstellung eines Reifens nach Anspruch 11, bei welchem in den Fettsäureestem (e) die ungesättigte Fettsäure ausgewählt wird aus: Undecylensäure, Oleinsäure, Erucinsäure, Sorbinsäure, Linolsäure, Linolensäure, Arachidonsäure, Propiolsäure, Stearolsäure oder Mischungen davon.

37. Verfahren zur Herstellung eines Reifens nach einem der Ansprüche 34 bis 36, bei welchem in den Fettsäureestern (e) der Polyalkohol ausgewählt werden kann aus Ethylenglycol, Diethylenglycol, Triethylenglycol, Propylenglycol, Dipropylenglycol, Butandiol, Pentandiol, Hexandiol, Glycerin, Diglycerin, Triglycerin, Pentaerythrol, Sorbitan, Sorbitol, Mannitol oder Mischungen davon.

38. Verfahren zur Herstellung eines Reifens nach Anspruch 37, bei welchem der Polyalkohol Glycerin ist.

39. Verfahren zur Herstellung eines Reifens nach einem der vorhergehenden Ansprüche, bei welchem der die Dehnviskosität reduzierende Zusatzstoff in der elastomeren Masse in einer Menge von 0,1 phr bis 10 phr vorhanden ist.

40. Verfahren zur Herstellung eines Reifens nach Anspruch 39, bei welchem der die Dehnviskosität reduzierende Zusatzstoff in der elastomeren Masse in einer Menge von 2 phr bis 5 phr vorhanden ist.

41. Verfahren zur Herstellung eines Reifens nach einem der vorhergehenden Ansprüche, bei welchem die elastomere Masse wenigstens ein elastomeres Dienpolymer (f) aufweist.

42. Verfahren zur Herstellung eines Reifens nach Anspruch 41, bei welchem das elastomeren Dienpolymer (f) eine Glasübergangstemperatur (Tg) unter 20°C hat.

43. Verfahren zur Herstellung eines Reifens nach Anspruch 42, bei welchem das elastomere Dienpolymer (f) ausgewählt wird aus:
- Cis-1,4-Polyisopren,
- 3,4-Polyisopren,
- Polybutadien,
- fakultativ halogenierten
-- Isopren/Isobuten-Copolymeren,
-- 1,3-Butadien/Acrylnitril-Copolymeren,
-- Styrol/1,3-Butadien-Copolymeren,
-- Styrol/Isopren/1,3-Butadien-Copolymeren,
-- Styrol/1,3-Butadien/Acrylnitril-Copolymeren
- oder Mischungen davon.

44. Verfahren zur Herstellung eines Reifens nach einem der vorhergehenden Ansprüche, bei welchem die elastomere Masse wenigstens ein elastomeres Polymer von einem oder mehreren Monoolefinen mit einem olefinischen Comonomer oder Derivaten davon (g) aufweist.

45. Verfahren zur Herstellung eines Reifens nach Anspruch 44, bei welchem das elastomere Polymer (g) ausgewählt wird aus:
- Ethylen/Propylen-Copolymeren (EPR), oder
- Ethylen/Propylen/Dien-Copolymeren (EPDM),
- Polyisobuten,
- Butylkautschuken,
- Halobutylkautschuken, oder
- Mischungen davon.

46. Verfahren zur Herstellung eines Reifens nach einem der vorhergehenden Ansprüche, bei welchen in der elastomeren Masse wenigstens ein verstärkender Füllstoff in einer Menge von 0,1 phr bis 120 phr vorhanden ist.

47. Verfahren zur Herstellung eines Reifens nach Anspruch 46, bei welchem der verstärkende Füllstoff Ruß ist.

48. Verfahren zur Herstellung eines Reifens nach Anspruch 46, bei welchem der verstärkende Füllstoff Siliciumdioxid ist.

49. Verfahren zur Herstellung eines Reifens nach Anspruch 48, bei welchem wenigstens ein Haftvermittler vorhanden ist.

50. Verfahren zur Verringerung der Dehnviskosität einer elastomeren Masse, bei welchem der elastomeren Masse wenigstens ein die Dehnviskosität reduzierender Zusatzstoff in einer solchen Menge zugesetzt wird, dass die Dehnviskosität der elastomeren Masse gemessen bei 120°C bei einer Scherrate von wenigstens 1000 s⁻¹ bezogen auf die Dehnviskosität gemessen bei den gleichen Bedingungen der von dem Zusatzstoff freien elastomeren Zusammensetzung wenigstens 10% niedriger ist.

51. Verfahren zur Reduzierung der Dehnviskosität einer elastomeren Masse nach Anspruch 50, bei welchem die Dehnviskosität der elastomeren Masse gemessen bei 120°C bei einer Scherrate von wenigstens 1000 s⁻¹ bezogen auf die Dehnviskosität gemessen bei den gleichen Bedingungen der von dem Zusatzstoff freien elastomeren Masse 15% niedriger ist.

52. Verfahren zum Reduzieren der Dehnviskosität einer elastomeren Massen nach Anspruch 50 oder 51, bei welchem die Dehnviskosität der elastomeren Masse gemessen bei 120°C bei einer Scherrate von wenigstens 1000 s⁻¹ bezogen auf die Dehnviskosität gemessen bei den gleichen Bedingungen der von dem Zusatzstoff freien elastomeren Zusammensetzung nicht niedriger als 50% ist.

53. Verfahren zum Reduzieren der Dehnviskosität einer elastomeren Masse nach einem der Ansprüche 50 bis 52, bei welchen der die Dehnviskosität reduzierende Zusatzstoff nach einem der Ansprüche 11 bis 40 definiert wird.

54. Verfahren zum Reduzieren der Dehnviskosität einer elastomeren Masse nach einem der Ansprüche 50 bis 53, bei welchem die elastomere Masse wenigstens ein elastomeres Dienpolymer (f) aufweist, das in einem der Ansprüche 41 bis 43 definiert ist.

55. Verfahren zum Reduzieren der Dehnviskosität einer elastomeren Masse nach einem der Ansprüche 50 bis 54, bei welchem die elastomere Masse wenigstens ein elastomeres Polymer von einem oder mehreren Monoolefinen mit einem olefinischen Copolymer oder Derivaten davon (g) aufweist, wie es in Anspruch 45 definiert ist.

56. Verfahren zum Reduzieren der Dehnviskosität einer elastomeren Masse nach einem der Ansprüche 50 bis 55, bei welchem die elastomere Masse wenigstens einen verstärkenden Füllstoff in einer Menge von 0,1 phr bis 120 phr aufweist.

57. Verfahren zur Reduzierung der Dehnviskosität einer elastomeren Masse nach Anspruch 56, bei welchem der verstärkende Füllstoff nach einem der Ansprüche 47 bis 49 definiert ist.

## Revendications

1. Procédé de production de pneumatiques, qui comporte :
- le fait d'alimenter une extrudeuse avec une composition élastomère,
- le fait de mettre cette composition élastomère, par extrusion, sous la forme d'un élément allongé continu,
- et le fait de déposer cet élément allongé continu sur un support, en de multiples enroulements, pour en faire un élément de structure d'un pneumatique ;
et dans lequel procédé l'étape de mise en forme est réalisée à une vitesse de cisaillement d'au moins 1000 s⁻¹ et la composition élastomère contient au moins un adjuvant réducteur de viscosité élongationnelle en une quantité telle que la viscosité élongationnelle de ladite composition élastomère, mesurée à 120 °C et à la vitesse de cisaillement de l'étape de mise en forme, est d'au moins 10 % inférieure à la viscosité élongationnelle, mesurée dans les mêmes conditions, de ladite composition élastomère dépourvue de cet adjuvant.

2. Procédé de production de pneumatiques, conforme à la revendication 1, dans lequel la viscosité élongationnelle de ladite composition élastomère, mesurée à 120 °C et à la vitesse de cisaillement de l'étape de mise en forme, est d'au moins 15 % inférieure à la viscosité élongationnelle, mesurée dans les mêmes conditions, de ladite composition élastomère dépourvue dudit adjuvant.

3. Procédé de production de pneumatiques, conforme à la revendication 1 ou 2, dans lequel la viscosité élongationnelle de ladite composition élastomère, mesurée à 120 °C et à la vitesse de cisaillement de l'étape de mise en forme, n'est pas inférieure à 50 % de la viscosité élongationnelle, mesurée dans les mêmes conditions, de ladite composition élastomère dépourvue dudit adjuvant.

4. Procédé de production de pneumatiques, conforme à l'une des revendications précédentes, dans lequel le support est un support rotatif.

5. Procédé de production de pneumatiques, conforme à l'une des revendications précédentes, dans lequel le support est un support rigide.

6. Procédé de production de pneumatiques, conforme à la revendication 5, dans lequel le support rigide a la forme d'un tore.

7. Procédé de production de pneumatiques, conforme à l'une des revendications précédentes, lequel procédé est mis en oeuvre avec un rapport d'étirement K supérieur à 1.

8. Procédé de production de pneumatiques, conforme à la revendication 7, dans lequel le rapport d'étirement K est supérieur à 1,5.

9. Procédé de production de pneumatiques, conforme à l'une des revendications précédentes, dans lequel l'étape de mise en forme est réalisée à une vitesse de cisaillement de 2000 à 8000 s⁻¹.

10. Procédé de production de pneumatiques, conforme à la revendication 9, dans lequel l'étape de mise en forme est réalisée à une vitesse de cisaillement de 4000 à 6000 s⁻¹.

11. Procédé de production de pneumatiques, conforme à l'une des revendications précédentes, dans lequel l'adjuvant réducteur de viscosité élongationnelle est choisi parmi :
a) les esters glycidyliques d'acide carboxylique α-ramifié comportant 6 à 22 atomes de carbone ;
b) les cires polyoléfiniques ;
c) les copolymères d'éthylène et d'au moins une α-oléfine aliphatique, et, en option, d'un polyène ;
d) les polymères thermoplastiques comportant une chaîne hydrocarbonée principale à laquelle sont reliés des groupes hydrophiles ;
e) et les esters d'acide gras, dérivés d'au moins un acide gras saturé ou insaturé, comportant 8 à 24 atomes de carbone, et d'au moins un polyol comportant 2 à 6 atomes de carbone.

12. Procédé de production de pneumatiques, conforme à la revendication 11, dans lequel les esters glycidyliques (a) sont choisis parmi ceux qui ont pour formule générale la formule (I) suivante : 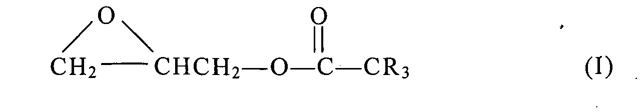 dans laquelle les entités représentées par R, identiques ou différentes les unes des autres, sont des atomes d'hydrogène ou des groupes aliphatiques linéaires ou ramifiés, sous réserve que ces groupes représentés par R comportent au total de 6 à 18 atomes de carbone.

13. Procédé de production de pneumatiques, conforme à la revendication 11, dans lequel les cires polyoléfiniques (b) sont choisies parmi les homopolymères d'une α-oléfine et les copolymères d'au moins deux α-oléfines, tels les éthylène, propylène, 1-butène, 1-hexène, 4-méthyl-1-pentène, 1-décène et leurs mélanges, qui présentent une viscosité intrinsèque (η), mesurée à 135 °C dans de la décaline, de 0,03 à 1,0 dl/g.

14. Procédé de production de pneumatiques, conforme à la revendication 13, dans lequel les cires polyoléfiniques (b) présentent un indice de distribution des masses moléculaires (MWD) inférieur à 5.

15. Procédé de production de pneumatiques, conforme à la revendication 13 ou 14, dans lequel les cires polyoléfiniques (b) présentent une masse molaire moyenne en nombre inférieure à 4000.

16. Procédé de production de pneumatiques, conforme à l'une des revendications 13 à 15, dans lequel les cires polyoléfiniques (b) présentent un point de fusion (T_{f}) inférieur à 140 °C.

17. Procédé de production de pneumatiques, conforme à l'une des revendications 13 à 16, dans lequel les cires polyoléfiniques (b) présentent une viscosité à 140 °C, mesurée selon la norme ASTM D 3236-88, inférieure à 160 centipoises.

18. Procédé de production de pneumatiques, conforme à l'une des revendications 13 à 17, dans lequel les cires polyoléfiniques (b) sont une cire de polyéthylène ou des cires de copolymère d'éthylène et d'α-oléfine.

19. Procédé de production de pneumatiques, conforme à la revendication 11, dans lequel le copolymère d'éthylène (c) présente un indice de distribution des masses moléculaires (MWD) inférieur à 5 et une enthalpie de fusion (ΔH_{f}) d'au moins 30 J/g.

20. Procédé de production de pneumatiques, conforme à la revendication 19, dans lequel, dans le copolymère d'éthylène (c), l'α-oléfine aliphatique est une oléfine de formule CH₂=CH-R où R représente un groupe alkyle linéaire ou ramifié comportant 1 à 12 atomes de carbone.

21. Procédé de production de pneumatiques, conforme à la revendication 20, dans lequel l'α-oléfine aliphatique est choisie parmi les propylène, 1-butène, isobutylène, 1-pentène, 4-méthyl-1-pentène, 1-hexène, 1-octène, 1-dodécène et leurs mélanges.

22. Procédé de production de pneumatiques, conforme à la revendication 21, dans lequel l'α-oléfine aliphatique est du 1-octène.

23. Procédé de production de pneumatiques, conforme à l'une des revendications 19 à 22, dans lequel le polyène est un diène, un triène ou un tétraène, conjugué ou non-conjugué.

24. Procédé de production de pneumatiques, conforme à la revendication 23, dans lequel le polyène est un diène.

25. Procédé de production de pneumatiques, conforme à l'une des revendications 19 à 24, dans lequel le copolymère d'éthylène (c) présente une masse volumique de 0,86 à 0,93 g/cm³.

26. Procédé de production de pneumatiques, conforme à l'une des revendications 19 à 25, dans lequel le copolymère d'éthylène (c) présente un indice de fluidité à chaud (MFI), mesuré selon la norme ASTM D 1230-00, de 0,1 à 35 g/10 min.

27. Procédé de production de pneumatiques, conforme à l'une des revendications 19 à 26, dans lequel le copolymère d'éthylène (c) présente un point de fusion d'au moins 30 °C.

28. Procédé de production de pneumatiques, conforme à la revendication 11, dans lequel, dans les polymères hydrophiles (d), les groupes hydrophiles sont choisis parmi :
- des groupes hydroxyle -OH ;
- des groupes carboxyle -COOH, éventuellement, au moins en partie, sous forme salifiée ;
- des groupes ester -COOR, où R représente un groupe alkyle ou hydroxyalkyle ;
- des groupes amide -CONH₂ ;
- des groupes sulfo -SO₃H, éventuellement, au moins en partie, sous forme salifiée.

29. Procédé de production de pneumatiques, conforme à la revendication 28, dans lequel les polymères hydrophiles (d) sont capables d'absorber une quantité d'eau représentant au moins 0,1 % du poids du polymère, au bout de 24 heures de séjour dans un environnement à 50 % d'humidité relative et à la température de 24 °C (quantité d'eau mesurée selon la norme ASTM D-570).

30. Procédé de production de pneumatiques, conforme à la revendication 28 ou 29, dans lequel les polymères hydrophiles (d) présentent une température de fusion inférieure à 230 °C.

31. Procédé de production de pneumatiques, conforme à l'une des revendications 28 à 30, dans lequel les polymères hydrophiles (d) sont choisis parmi les poly(acide acrylique), poly(acide méthacrylique), poly(acrylate d'hydroxyalkyle), poly(acrylate d'alkyle), polyacrylamide, copolymères d'acrylamide et d'acide acrylique, poly(alcool vinylique), poly(acétate de vinyle), copolymères d'alcool vinylique et d'acétate de vinyle, copolymères d'éthylène et d'acétate de vinyle, copolymères d'éthylène et d'alcool vinylique, terpolymères d'éthylène, d'alcool vinylique et d'acétate de vinyle, poly-(acide vinyl-sulfonique) et polystyrène sulfoné, ainsi que leurs mélanges.

32. Procédé de production de pneumatiques, conforme à l'une des revendications 28 à 31, dans lequel les polymères hydrophiles (d) comportent des motifs répétés de formule (II) suivante : 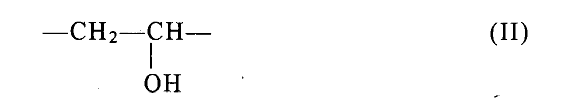 dont la distribution au long de la chaîne est aléatoire ou en blocs.

33. Procédé de production de pneumatiques, conforme à l'une des revendications 28 à 32, dans lequel les polymères hydrophiles (d) sont choisis parmi :
i) les polymères d'alcool vinylique obtenus par hydrolyse de poly(acétate de vinyle), dont le degré d'hydrolyse vaut de 50 à 100 % en moles ;
ii) et les copolymères d'éthylène et d'alcool vinylique dont la teneur en motifs d'éthylène vaut de 20 à 60 % en moles.

34. Procédé de production de pneumatiques, conforme à la revendication 11, dans lequel, dans les esters d'acide gras (e), l'acide gras saturé est choisi parmi l'acide caprique, l'acide laurique, l'acide myristique, l'acide palmitique, l'acide stéarique, l'acide 12-hydroxy-stéarique, l'acide béhénique et leurs mélanges.

35. Procédé de production de pneumatiques, conforme à la revendication 34, dans lequel l'acide gras saturé est l'acide stéarique.

36. Procédé de production de pneumatiques, conforme à la revendication 11, dans lequel, dans les esters d'acide gras (e), l'acide gras insaturé est choisi parmi l'acide undécylénique, l'acide oléique, l'acide érucique, l'acide sorbique, l'acide linoléique, l'acide linolénique, l'acide arachidonique, l'acide propiolique, l'acide stéarolique et leurs mélanges.

37. Procédé de production de pneumatiques, conforme à l'une des revendications 34 à 36, dans lequel, dans les esters d'acide gras (e), le polyol peut être choisi parmi les éthylèneglycol, diéthylèneglycol, triéthylèneglycol, propylèneglycol, dipropylèneglycol, butanediol, pentanediol, hexanediol, glycérol, diglycérol, triglycérol, pentaérythritol, sorbitanne, sorbitol et mannitol, ainsi que leurs mélanges.

38. Procédé de production de pneumatiques, conforme à la revendication 37, dans lequel le polyol est le glycérol.

39. Procédé de production de pneumatiques, conforme à l'une des revendications précédentes, dans lequel l'adjuvant réducteur de viscosité élongationnelle se trouve dans la composition élastomère en une proportion de 0,1 à 10 pcpr (parties pour cent parties de résine).

40. Procédé de production de pneumatiques, conforme à la revendication 39, dans lequel l'adjuvant réducteur de viscosité élongationnelle se trouve dans la composition élastomère en une proportion de 2 à 5 pcpr.

41. Procédé de production de pneumatiques, conforme à l'une des revendications précédentes, dans lequel la composition élastomère comprend au moins un polymère élastomère (f) de diène.

42. Procédé de production de pneumatiques, conforme à la revendication 41, dans lequel le polymère élastomère (f) de diène présente une température de transition vitreuse Tᵥ inférieure à 20 °C.

43. Procédé de production de pneumatiques, conforme à la revendication 42, dans lequel le polymère élastomère (f) de diène est choisi parmi les suivants : cis-1,4-polyisoprène, 3,4-polyisoprène, polybutadiène, copolymères d'isoprène et d'isobutène facultativement halogénés, copolymères de 1,3-butadiène et d'acrylonitrile, copolymères de styrène et de 1,3-butadiène, copolymères de styrène, d'isoprène et de 1,3-butadiène, copolymères de styrène, de 1,3-butadiène et d'acrylonitrile, et leurs mélanges.

44. Procédé de production de pneumatiques, conforme à l'une des revendications précédentes, dans lequel la composition élastomère comprend au moins un polymère élastomère (g) d'une ou plusieurs monooléfines et d'un comonomère oléfinique ou de leurs dérivés.

45. Procédé de production de pneumatiques, conforme à la revendication 44, dans lequel le polymère élastomère (g) est choisi parmi les suivants : copolymères EPR d'éthylène et de propylène, copolymères EPDM d'éthylène, de propylène et de diène, polyisobutène, caoutchoucs butyl, caoutchoucs butyl halogénés, et leurs mélanges.

46. Procédé de production de pneumatiques, conforme à l'une des revendications précédentes, dans lequel on utilise au moins une charge renforçante, présente dans la composition élastomère en une proportion de 0,1 à 120 pcpr.

47. Procédé de production de pneumatiques, conforme à la revendication 46, dans lequel la charge renforçante est du noir de carbone.

48. Procédé de production de pneumatiques, conforme à la revendication 46, dans lequel la charge renforçante est de la silice.

49. Procédé de production de pneumatiques, conforme à la revendication 48, dans lequel on utilise au moins un agent de couplage.

50. Procédé permettant de réduire la viscosité élongationnelle d'une composition élastomère, qui comporte le fait d'ajouter à cette compo-sition élastomère au moins un adjuvant réducteur de viscosité élongation-nelle, en une quantité telle que la viscosité élongationnelle de ladite com-position élastomère, mesurée à 120 °C et à une vitesse de cisaillement d'au moins 1000 s⁻¹, est d'au moins 10 % inférieure à la viscosité élongation-nelle, mesurée dans les mêmes conditions, de ladite composition élastomère dépourvue de cet adjuvant.

51. Procédé permettant de réduire la viscosité élongationnelle d'une composition élastomère, conforme à la revendication 50, dans lequel la viscosité élongationnelle de ladite composition élastomère, mesurée à 120 °C et à une vitesse de cisaillement d'au moins 1000 s⁻¹, est d'au moins 15 % inférieure à la viscosité élongationnelle, mesurée dans les mêmes conditions, de ladite composition élastomère dépourvue de cet adjuvant.

52. Procédé permettant de réduire la viscosité élongationnelle d'une composition élastomère, conforme à la revendication 50 ou 51, dans lequel la viscosité élongationnelle de ladite composition élastomère, mesu-rée à 120 °C et à une vitesse de cisaillement d'au moins 1000 s⁻¹, n'est pas inférieure à 50 % de la viscosité élongationnelle, mesurée dans les mêmes conditions, de ladite composition élastomère dépourvue de cet adjuvant.

53. Procédé permettant de réduire la viscosité élongationnelle d'une composition élastomère, conforme à l'une des revendications 50 à 52, dans lequel l'adjuvant réducteur de viscosité élongationnelle est tel que défini dans l'une des revendications 11 à 40.

54. Procédé permettant de réduire la viscosité élongationnelle d'une composition élastomère, conforme à l'une des revendications 50 à 53, dans lequel la composition élastomère comprend au moins un polymère élastomère (f) de diène, tel que défini dans l'une des revendications 41 à 43.

55. Procédé permettant de réduire la viscosité élongationnelle d'une composition élastomère, conforme à l'une des revendications 50 à 54, dans lequel la composition élastomère comprend au moins un polymère élastomère (g) d'une ou plusieurs monooléfines et d'un comonomère oléfinique ou de leurs dérivés, tel que défini dans la revendication 45.

56. Procédé permettant de réduire la viscosité élongationnelle d'une composition élastomère, conforme à l'une des revendications 50 à 55, dans lequel la composition élastomère comprend au moins une charge renforçante, en une proportion de 0,1 à 120 pcpr.

57. Procédé permettant de réduire la viscosité élongationnelle d'une composition élastomère, conforme à la revendication 56, dans lequel la charge renforçante est telle que définie dans l'une des revendications 47 à 49.
